(19)

Europäisches
Patentamt
European
Patent Office
Office européen
des brevets

(11) **EP 3 070 669 A1**

(12) **EUROPEAN PATENT APPLICATION**

(43) Date of publication:
**21.09.2016 Bulletin 2016/38**

(51) Int Cl.:
***G06T 5/00*** (2006.01)

(21) Application number: **15305397.0**

(22) Date of filing: **18.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Hoerentrup, Jobst**
**30974 Wennigsen (DE)**
• **Schlosser, Markus**
**76137 Karlsruhe (DE)**

(74) Representative: **Huchet, Anne et al**
**Technicolor**
**1, rue Jeanne d'Arc**
**92443 Issy-les-Moulineaux (FR)**

(54) **METHOD AND APPARATUS FOR COLOR SMOOTHING IN AN ALPHA MATTING PROCESS**

(57)     A method for color correction in an alpha matting process for an image and an apparatus (20) configured to perform the method are described. The apparatus (20) comprises a parameter retrieving unit (23) that retrieves (10) an initial image representing unmixed colors, e.g. from a color estimator (24) or by resorting to a previously generated initial image. An edge-preserving smoothing filter (25) then filters (11) the initial image.

**Fig. 9**

**Description**

FIELD

The present principles relate to a method and an apparatus for color smoothing in an alpha matting process. In particular, the present principles relate to a method and an apparatus for color smoothing in an alpha matting process with an edge-preserving smoothing filter.

BACKGROUND

Alpha matting refers to the problem of softly extracting a foreground object out of an image. In contrast to binary segmentation, where each pixel is either classified as fully foreground or background, alpha matting recognizes the existence of "mixed" pixels. A major reason for such mixed pixels is the limited resolution of cameras, where light from the foreground object and the background contribute to the incoming light of a camera sensor element. Other reasons can be motion-blur and (semi-)transparencies in the object itself. Alpha matting and thus the soft extraction of objects from a still image or a video sequence is a fundamental problem in computer vision in general and movie post-production in particular.

The mixing coefficient is typically called "alpha". It is defined to be between 0 and 1, i.e., 0% and 100%, and describes the fraction to which light from the foreground object contributed to the incoming light on an image sensor element, i.e. to an image pixel. An alpha matting algorithm tries to estimate this alpha coefficient, as well as the unmixed foreground and background colors. Each (unmixed) color is defined by three parameters, e.g. R, G, and B values in case of the RGB color space. Alpha matting hence needs to determine seven unknowns from only three knowns. The problem is thus ill-posed and requires additional constraints. One common constraint is a trimap, which is provided along with the input image or sequences thereof. The trimap indicates three different types of regions: known foreground, known background, and an unknown region where the foreground potentially mixes with the background. The task of the alpha matting algorithm is to estimate the alpha value for all pixels in the unknown region.

In [1] a good overview is provided over the state of the art of alpha matting. All top performing methods conduct an initial per-pixel estimation of the alpha value, the foreground color, and the background color. In a second step, the alpha matte is usually refined to reduce noise and to align the initial alpha matte to the structures, i.e. color gradients, visible in the image.

A lot of research has been done on the refinement of the alpha matte [2,3,4]. However, as mentioned above, the final goal of alpha matting is to softly extract a foreground object out of an image. Thus in addition to an alpha value, alpha matting also needs to provide the (unmixed) foreground color for each pixel.

Today there is only very little research on the refinement of foreground / background colors.

Given an alpha matte, Levin et al. [2] assume that the foreground $F$ and the background $B$ are smooth, especially at matte edges, and reconstruct $F$ and $B$ so that alpha, $F$ and $B$ well fit the compositing equation $I = F\alpha + (1 - \alpha)B$, where $I$ denotes the observed color in the image. Although this method provides state of the art quality, the reconstruction requires solving a large sparse system of linear equations for each color channel. As such it is memory- and compute-intensive.

Köhler et al. [3] add a regularization term to Levin's approach, which is useful for the special case of motion blur. Therefore, this method is even more memory- and compute-intensive than Levin's method.

SUMMARY

It is an object of the present principles to propose an improved solution for color smoothing in an alpha matting process.

According to one aspect of the present principles, a method for color smoothing in an alpha matting process for an image comprises:

- retrieving an initial image representing unmixed colors; and
- filtering the initial image with an edge-preserving smoothing filter.

Accordingly, a computer readable storage medium has stored therein instructions enabling color smoothing in an alpha matting process for an image, which when executed by a computer, cause the computer to:

- retrieve an initial image representing unmixed colors; and
- filter the initial image with an edge-preserving smoothing filter.

The computer readable storage medium is a non-transitory volatile or non-volatile storage medium, such as, for example, a hard disk, an optical or magnetic disk or tape, a solid state memory device, etc. The storage medium thus tangibly embodies a program of instructions executable by a computer or a processing device to perform program steps as described herein.

Also, in one embodiment, an apparatus configured to smooth colors in an alpha matting process for an image comprises:

- a retrieving unit configured to retrieve an initial image representing unmixed colors; and
- an edge-preserving smoothing filter configured to filter the initial image.

In another embodiment, an apparatus configured to smooth colors in an alpha matting process for an image comprises a processing device and a memory device having stored therein instructions, which, when executed by the processing device, cause the apparatus to:

- retrieve an initial image representing unmixed colors; and
- filter the initial image with an edge-preserving smoothing filter.

In one embodiment, the initial color estimates are retrieved by:

- retrieving a trimap for the image; and
- computing a filter output only for pixels in the unknown region of the trimap.

In alpha matting, a color sampling stage provides an initial estimate for both the foreground color and the background color for each pixel in the unknown region of the trimap. As a result, one (partial) image for the foreground object and one (partial) image for the background are obtained. These two images are smoothed separately by an edge-preserving smoothing filter, e.g. a joint multilateral filter [5]. The filter is configured in such a way that in regions where the alpha matte has an edge, estimated foreground/background colors from nearby foreground/background regions are encouraged to propagate into the transition region. In the foreground/background region, the filter behaves like a classical edge-preserving smoothing filter.

In one embodiment of the present solution, the edge-preserving smoothing filter is configured to consider additional per-pixel weights during the filtering. Increasing a pixel's weight generally increases its influence on the final filter output, whereas decreasing a pixel's weight generally decreases its influence. In the initial sampling stage, a pixel's foreground color can generally be estimated increasingly accurate with an increasing amount of foreground light that contributed to the pixel's color, i.e. the higher its alpha value is. Therefore, in one embodiment of the present solution, an estimated alpha value of a pixel is used as its weight. Alternatively, a product of an estimated alpha value of a pixel and a confidence assigned to the estimated alpha value is used as its weight.

The smoothed color can be regarded as that part of the color of a mixed pixel that can be explained by its neighbors. As a consequence, the color-smoothing method provides a more reliable estimate of the color gradient present in the neighborhood of a pixel. Local per-pixel variations can, therefore, be re-established using the color correction method described in [6]. Furthermore, it is advantageous to correct the color estimates not only after, but also before the smoothing, especially as the computational requirements for the correction are almost negligible.

Furthermore, the proposed approach is not restricted to processing color estimates stemming from a color sampling stage. It makes no assumption on the origin of the color estimates.

The proposed solution clearly improves upon the input foreground colors. It is significantly faster than the current state of the art when a small filter kernel is used, while being able to exceed the quality of state of the art approaches. In particular, the approach avoids color artifacts in the transition region between the foreground and the background. Compared to the state of the art, the method is not only better suited for consumer devices with comparably small CPU power and small memory, but also better suited for processing high resolution content in post-production.

BRIEF DESCRIPTION OF THE DRAWINGS

| | |
|---|---|
| Figs. 1a)-c) | show a portion of a foreground-background transition, the associated ground-truth alpha matte, and the initial foreground colors for an exemplary image; |
| Fig. 2 | shows MSE errors of the proposed method and alternatives for different filter kernel radiuses using ground-truth alpha values as input; |
| Fig. 3 | shows MSE errors of the proposed method and alternatives for different filter kernel radiuses using estimated alpha values as input; |
| Figs. 4a)-c) | depict visual comparisons of results obtained for a first image region; |
| Figs. 5a)-c) | depict visual comparisons of results obtained for a second image region; |
| Figs. 6a)-c) | depict visual comparisons of results obtained for a third image region; |
| Figs. 7 a)-c) | show portions of foregrounds not multiplied by alpha; |
| Fig. 8 | compares processing times of the different methods for different kernel radiuses; |
| Fig. 9 | schematically illustrates an embodiment of a method for color smoothing in an alpha matting process for an image; |
| Fig. 10 | schematically depicts one embodiment of an apparatus for color smoothing in an alpha matting process according to the |

present principles; and

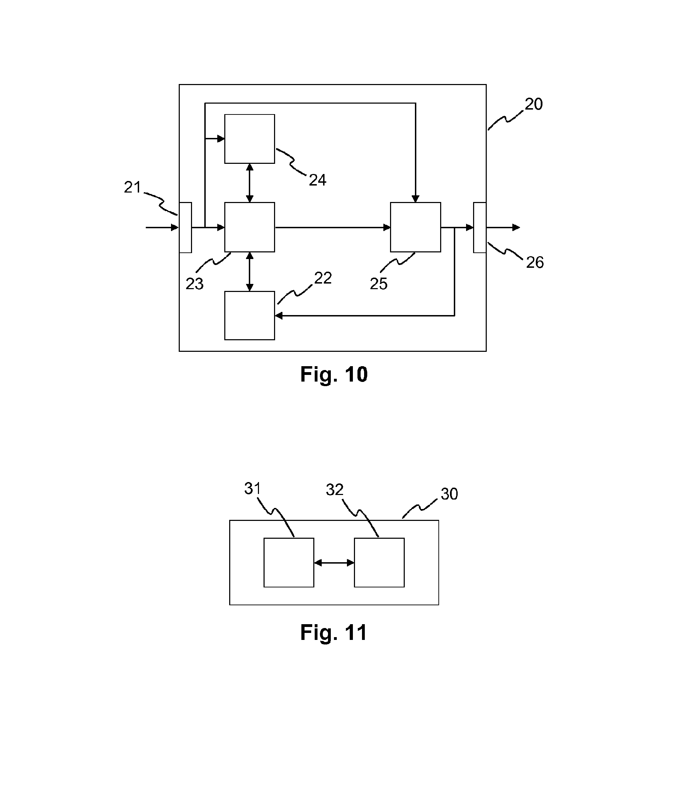

Fig. 11 schematically illustrates another embodiment of an apparatus for color smoothing in an alpha matting process according to the present principles.

DETAILED DESCRIPTION OF PREFERRED EMBODIMENTS

For a better understanding the principles of some embodiments shall now be explained in more detail in the following description with reference to the figures. It is understood that the proposed solution is not limited to these exemplary embodiments and that specified features can also expediently be combined and/or modified without departing from the scope of the present principles as defined in the appended claims.

For simplicity and readability, the detailed description focuses on the processing of the estimated foreground color. The background color can be treated in a similar way.

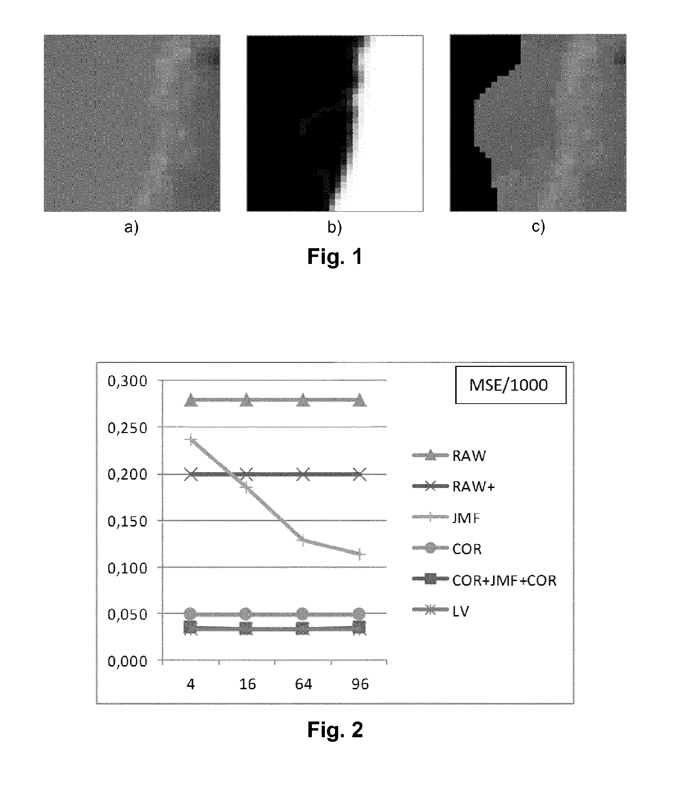

Fig. 1a) shows an example of a transition region for an exemplary image, where the foreground mixes with the background. For the unmixed foreground pixels on the right side of the image, alpha should be one. Alpha should be zero for the background pixels on the left side of the image, and something between zero and one for the pixels in the transition region. This is shown by the alpha matte in Fig. 1b), where black represents zero and white represents one. Fig. 1c) shows the initial foreground color estimates as provided by an initial estimation stage. Pixels in the known foreground carry the color observed in the image, and pixels in the known background do not carry any foreground color (indicated by black pixels). For each pixel in the unknown region, a foreground color has been estimated.

Levin et al. [2] make the assumption that at an object edge, the observed color change is mainly caused by the change in alpha. Correspondingly, whenever alpha changes, they penalize a change in the foreground and background colors in the direction of the alpha gradient. As the main aspect of their work consists in a procedure to estimate alpha values directly without estimating foreground and background colors, they need to reconstruct these colors in a global optimization scheme.

According to the present principles, however, use is made of already available color estimates, which may be used to avoid the global optimization procedure and to perform a fast local refinement instead.

One aim is to improve the color estimates at object edges. In principle, a very simple strategy consists in calculating a gradient image form the alpha matte and in propagating colors from the foreground region into the transition region. Such a strategy works at least for rather hard object edges, where a well-defined gradient exists. However, it sometimes is difficult to decide which colors exactly should be propagated.

As a consequence, it is advantageous to perform some kind of filtering operation and thus to take all color estimates in some neighborhood into account. Such a procedure also opens up the possibility to avoid the calculation of the gradient, which is known to amplify the noise present in the estimates. Instead of the gradient, a difference in alpha between a pixel and its neighbors can be used.

Furthermore, it is safe to assume that the reliability of a foreground color estimate increases with its alpha value. The higher the alpha value of a pixel, the higher is the portion of light from the foreground that hits the pixel's associated camera sensor element. If a pixel belongs to the background, i.e. its true alpha is zero, there is simply no foreground color that might be observed.

Using the estimated alpha value as a weight during the filtering already leads to a similar effect as using the gradient. Pixels in the transition region or even in the background receive a low weight and their color thus is more or less overwritten by more reliable estimates in the foreground region. This procedure also works in regions where no clear gradient may be determined, like regions comprising hair and fur.

Even in the foreground region some filtering is advantageous to remove wrong color estimates, which might have been selected during the color sampling stage. However, for pixels with an alpha estimate close to one, i.e. pixels presumably belonging to the foreground, the color estimates should not be smoothed too much. Actually, they should rather be changed in the direction of the originally observed color. This is, for example, achieved with the color-correction scheme described in [6]. When this color correction is performed as a post-processing step, there is no need to apply less smoothing to the foreground region than to the transition region. Filtering the foreground region in just the same way even provides a more reliable estimate of the color gradient present in the neighborhood of a pixel.

Advantageously, the filtering is guided by the edges present in the original image. To this end, an extended edge-preserving smoothing filter that takes weights into account is preferably used, e.g. the filter described in [5] or [8]. For the processing of the foreground color estimates the weights can simply equal the corresponding alpha estimates. Alternatively, a product of an estimated alpha value of a pixel and a confidence assigned to the estimated alpha value can be used as its weight.

To show its performance for improving foreground colors, the challenging alpha matting benchmark training data set from [1] is used, for which ground-truth alpha mattes and foreground colors are available. The sampling stage of Global Matting [4] is used to estimate the initial colors F and B. The proposed solution is compared with four others: In the diagrams, "RAW" is the error of the input foreground colors, "RAW+" the slightly improved foreground, where the estimated foreground color for pixels deemed fully foreground ($\alpha = 1$) are cor-

rected to the color observed in the image as

$$F' = \begin{cases} I \text{ if } \alpha = 1 \\ F \text{ otherwise} \end{cases},$$

"COR" represents the color correction method disclosed in [6], "LV" denotes Levin's method [2] for reconstructing the foreground, and finally "JMF" represents the present filtering method. It is envisioned that in practice the proposed solution can be combined with the color correction described in [6]. In principle, since the correction is very light-weight, it can be applied before the filtering, afterwards, or both. The best results are achieved by the proposed filtering in combination with a pre- and a post-correction of the colors. Through the pre-correction, the input colors to the filtering are improved. Through the post-correction, per-pixel details are re-established. In the diagrams, the corresponding results are marked as "COR+JMR+COR".

The Mean Square Error (MSE) weighted by alpha is used as the error metric. It is computed as follows:

$$MSE = \frac{1}{|U|} \sum_{i \in U} \alpha_i \cdot |F_i - G_i|^2,$$

where $U$ is the set of pixels in the unknown region, $|U|$ the number of pixels therein, $\alpha_i$ the ground-truth alpha value for pixel $i$, $F_i$ the corrected foreground color (as provided by the different methods) for pixel $i$, and $G_i$ the ground-truth foreground color for pixel $i$. The color differences are weighted by alpha. The smaller an alpha value is, the smaller is the amount of light from the foreground object that has hit the sensor element, and the less precise is the estimate.

Similarly, the calculated foreground colors will also be multiplied with alpha for the final compositing so that errors will be less visible for smaller alpha values. In the extreme case of an alpha value of 0, there is no foreground at the pixel at all, so the estimated foreground color is meaningless and should have no impact on the error.

The errors in terms of SAD (Sum of Absolute Differences) weighted by alpha have been omitted, since the diagrams often show a similar trend, and because the MSE and SAD numbers are generally considered with some care. For alpha mattes it is known that their correlation with the subjective quality is not too high [7]. Results for a visual comparison are provided further below. The $\sigma_s$ parameter of the filter is half the filter kernel radius in all conducted experiments.

As described above, alpha values are used as weights for filtering the foreground. In the first set of experiments, the ground-truth alpha values are used as the weights.

Fig. 2 compares the MSE errors of the results for different filter kernel radiuses with alternative methods. Since the alternative methods are independent of any filter kernel size, their plots are horizontal lines. Levin's method produces state of the art results. Without any pre- or post-correction, the present approach clearly improves upon the input colors with an increasing filter kernel radius, but can neither reach the level of quality obtained from Levin's method, nor the level obtained from applying the color correction method in [6] alone. This changes with the color pre- and post-correction enabled, where the proposed method is able to meet the level of quality obtained by Levin's method. The output quality of the present method changes only little with a varying filter kernel radius. A small kernel can thus be chosen for fast computations. More details on computational speed will be given further below.

In the second set of experiments estimated alpha values are used as the weights for smoothing the foreground. They were generated by the Global Matting algorithm, and refined using the Matting Laplacian [2]. Usage of these mattes is a more realistic scenario, since the ground-truth mattes as used in the previous experiments are usually not available. On the other hand, the final results are also influenced by false estimates in the mattes, since the filter weights are derived therefrom.

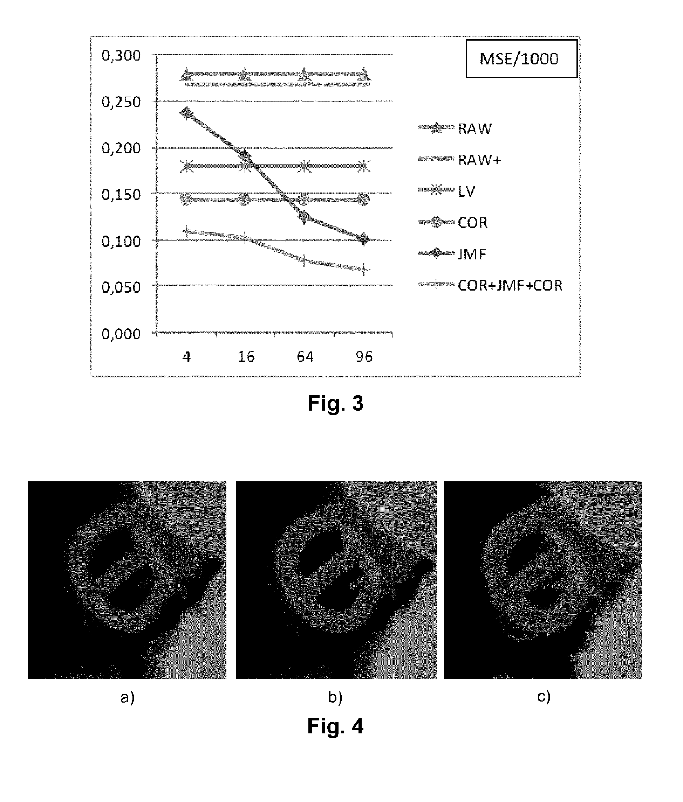

Fig. 3 compares the MSE errors of the results for different filter kernel radiuses with alternative methods. The proposed approach "COR+JMF+COR" clearly outperforms Levin's method as well as the color correction method of [6] taken alone. This is the case over the whole range of kernel sizes. For larger kernel sizes, the "JMF" filtering-only method without any pre-or post-correction is able to meet or exceed the level of quality obtained by Levin's method.

A comparison of the results obtained using the ground truth alpha mattes with the ones obtained using estimated mattes shows that the present approach is more robust to errors in the alpha mattes than Levin's. For the latter, the MSE raises by a factor of about 5.5. For the present method including the pre-and post-correction, depending on the filter kernel radius, the increase is only between 3.1 (r=4) and 1.9 (r=96). For Levin's approach, the gradient in the alpha matte controls the degree of smoothing. It is computed between neighboring pixels. A single false alpha estimate can therefore easily lead to a false gradient in the matte, which in turn translates into an over-smoothed foreground. In contrast, when computing the output for a pixel, the present filtering approach considers the alpha values of a larger neighborhood around the pixel, especially for the larger kernel sizes. The impact of a single false estimate is therefore limited. Correspondingly, for the present approach without any color correction ("JMF" plots) there is almost no increase at all. Finally, as the numbers show, this advantage is partly vitiated by the final per-pixel color correction as it again considers individual pixels.

Also visual comparisons of the results have been conducted, because as mentioned above, the MSE numbers generally need to be considered with some care.

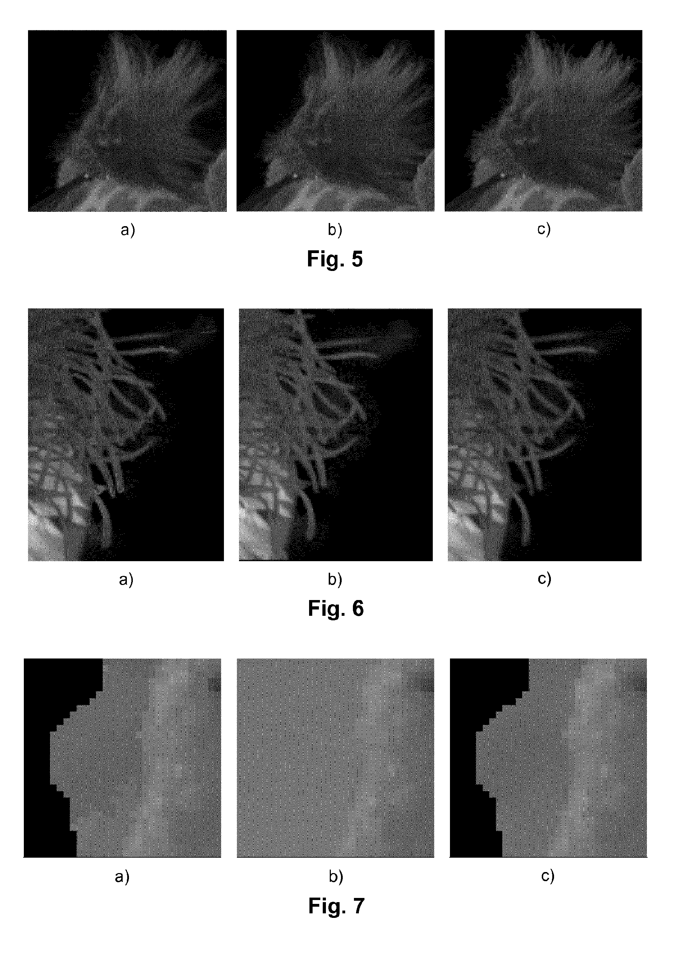

Figs. 4 and 5 show the final foreground images multiplied by alpha. Sub-images Figs. 4a) and 5a) are based on Levin's foreground, sub-images Figs. 4b) and 5b) on the foreground as proposed herein, and sub-images Figs. 4c) and 5c) on the ground-truth. In most regions of all the benchmark test cases, the results are indistinguishable from Levin's. As described in [6], Levin's method sometimes produces color artifacts at the border between the foreground and the background. The present color correction avoids these artifacts, and the filtering averages existing, unmixed foreground colors in a local neighborhood. The filtered colors are, therefore, inside the convex hull of these neighbor colors. Taken together, such artifacts are thus at least less likely. This clearly is one major advantage of the proposed approach. As can be seen from the alpha composites on a black background in Figs. 5 and 6, the results obtained based on the foreground as proposed herein look smooth and are free of the color artifacts that are visible in Levin's results.

Fig. 6 shows portions of a foreground refined by the color correction method described in [6] (Fig. 6a)), a foreground refined by the current method (Fig. 6b)), and a foreground reconstructed by Levin's method (Fig. 6c)). Each is multiplied by the same estimated alpha matte that was used to refine/reconstruct the foregrounds. Compared to the results from [6] (color correction only), the results achieved with the present approach are clearly smoother. Levin's method misses reconstructing the outer portion of the top strand. The result obtained with the present approach still exhibits some more noise, and the edges of the strands look a little more light-colored. This is likely caused by poor initial color estimates.

To better illustrate the effect of the proposed approach, Fig. 7 shows portions of foregrounds not multiplied by alpha. Fig. 7a) shows the unrefined foreground, Fig. 7b) the original image, and Fig. 7c) the foreground refined by the present approach. With the proposed approach the colors in the unmixed background portion of the unknown region are very smooth. The Bilateral Filter ensures that the color smoothing is limited to that side of the edge in the image. In contrast, the foreground is very detailed. Through the proposed color correction the colors of (almost) unmixed foreground pixels (better) match the colors in the original image, as can be seen, for example, in the darker spot in the upper right corner region.

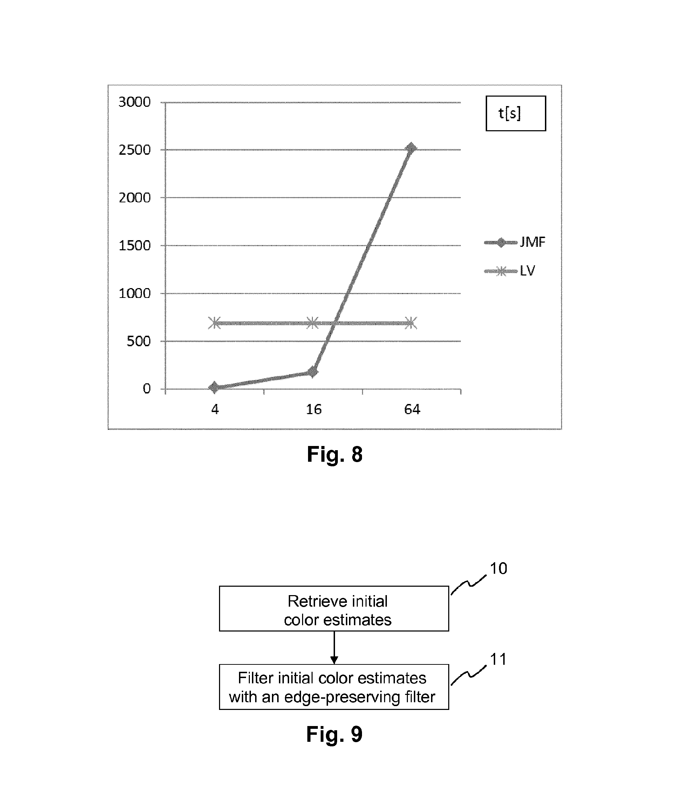

Fig. 8 compares the processing times of the different methods, accumulated over the complete set of images and trimaps in the training data set of [1]. C++ implementations of the different methods are used, executed single-threaded on an Intel Core i7-3770 CPU running at 3.4 GHz. An exact, non-approximate implementation of the joint multilateral filter [5] was used. It is known that its computational time increases quadratically with the chosen filter kernel radius.

Due to its global optimization scheme, Levin's method is computationally expensive and takes about 700 seconds using the above exemplary implementation. The proposed method takes only 14 seconds for a kernel radius of 4. At the same time, the quality of the results already exceeds the quality (measured by MSE) obtained from Levin's method, as can be seen from Fig. 3. With a kernel radius of 16, the proposed method takes 180 seconds to compute, which still is a lot faster than Levin's method, while the output quality further improves. Using a larger kernel radius further increases the quality but also takes much longer to compute, i.e. about 2500 seconds for a radius of 64. It is to be expected that the proposed approach will benefit from faster joint multilateral filters, which currently are subject to a lot of research. Much faster approximate solutions are already available, although they may come with some loss in quality. Furthermore, Levin's method optimizes a global cost, which is not only compute intensive, but also memory intensive. The proposed local filtering approach requires far less memory.

Fig. 9 schematically illustrates one embodiment of a method for color correction in an alpha matting process. In a first step an initial image representing unmixed colors is retrieved 10, e.g. by analyzing the image or by resorting to a previously generated initial image provided together with the image or available in a storage system or via a network. The initial image is then filtered 11 with an edge-preserving smoothing filter.

One embodiment of an apparatus 20 for color correction in an alpha matting process according to the present principles is schematically depicted in Fig. 10. The apparatus 20 has an input 21 for receiving an image, e.g. from a network or an external storage system. Alternatively, the image is retrieved from a local storage unit 22. A retrieving unit 23 retrieves 10 an initial image representing unmixed colors. The parameter retrieving unit 23 either retrieves 10 this initial image from a color estimator 24, which analyzes the image, or by resorting to a previously generated initial image provided together with the image via the input 21 or available in the external storage system or the local storage unit 22 or via the network. An edge-preserving smoothing filter 25 then filters 11 the initial image. The color smoothing results are preferably made available via an output 26. They may also be stored on the local storage unit 22. The output 26 may also be combined with the input 21 into a single bidirectional interface. Each of the different units 23, 24, 25 can be embodied as a different processor. Of course, the different units 23, 24, 25 may likewise be fully or partially combined into a single unit or implemented as software running on a processor.

Another embodiment of an apparatus 30 for color smoothing in an alpha matting process according to the present principles is schematically illustrated in Fig. 11. The apparatus 30 comprises a processing device 31 and a memory device 32 storing instructions that, when executed, cause the apparatus to perform steps according to one of the described methods.

For example, the processing device 31 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or combination thereof.

The local storage unit 22 and the memory device 32 may include volatile and/or non-volatile memory regions and storage devices such hard disk drives and DVD drives. A part of the memory is a non-transitory program storage device readable by the processing device 31, tangibly embodying a program of instructions executable by the processing device 31 to perform program steps as described herein according to the present principles.

REFERENCES

[1] C. Rhemann et al.'s Alpha Matting Benchmark at www.alphamatting.com.

[2] A. Levin et al.: "A Closed-Form Solution to Natural Image Matting", IEEE Transactions on Pattern Analysis and Machine Intelligence, Vol. 30 (2008), pp. 228-242.

[3] Köhler et al.: "Improving Alpha Matting and Motion Blurred Foreground Estimation", Proceedings of the 2013 IEEE International Conference on Image Processing (ICIP), pp. 3446-3450.

[4] Petschnigg et al.: "Digital photography with flash and no-flash image pairs", ACM Transactions on Graphics (TOG) - Proceedings of ACM SIGGRAPH 2004, Vol. 23 (2004), pp. 664-672.

[5] Jachalsky et al.: "Confidence evaluation for robust, fast-converging disparity map refinement", 2010 IEEE International Conference on Multimedia and Expo (ICME), pp. 1399-1404.

[6] European Patent Application 14306979.7 filed on 09 December 2014.

[7] C. Rhemann et al.: "A Perceptually Motivated Online Benchmark For Image Matting", Proceedings of the 2009 IEEE Conference on Computer Vision and Pattern Recognition (CVPR'09) (2009), pp. 1826-1833.

[8] European Patent Application 14306869.0 filed on 14 November 2014.

**Claims**

1. A method for color smoothing in an alpha matting process for an image, the method comprising:

   - retrieving (10) an initial image representing unmixed colors; and
   - filtering (11) the initial image with an edge-preserving smoothing filter.

2. The method according to claim 1, wherein the initial image carries unmixed foreground colors or unmixed background colors.

3. The method according to claim 1 or 2, wherein retrieving (10) the initial image comprises:

   - retrieving a trimap for the image; and
   - computing a filter output only for pixels in an unknown region of the trimap.

4. The method according to one of the preceding claims, wherein weights are assigned to pixels of the image and the edge-preserving smoothing filter is configured to consider the weights during filtering.

5. The method according to claim 4, wherein the weights are estimated alpha values of the pixels.

6. The method according to claim 4, wherein the weights are products of estimated alpha values of the pixels and confidences assigned to the estimated alpha values.

7. The method according to one of the preceding claims, wherein the edge-preserving smoothing filter is a joint multilateral filter.

8. An apparatus (20) configured to smooth colors in an alpha matting process for an image, the apparatus (20) comprising:

   - a retrieving unit (23) configured to retrieve (10) an initial image representing unmixed colors; and
   - an edge-preserving smoothing filter (25) configured to filter (11) the initial image.

9. An apparatus (30) configured to smooth colors in an alpha matting process for an image, the apparatus (30) comprising a processing device (31) and a memory device (32) having stored therein instructions, which, when executed by the processing device (31), cause the apparatus (30) to:

   - retrieve (10) an initial image representing unmixed colors; and
   - filter (11) the initial image with an edge-preserving smoothing filter.

10. A computer readable storage medium having stored therein instructions enabling color smoothing in an alpha matting process for an image, which when executed by a computer, cause the computer to:

- retrieve (10) an initial image representing unmixed colors; and
- filter (11) the initial image with an edge-preserving smoothing filter.

**Fig. 1**

**Fig. 2**

**Fig. 3**

a)                              b)                              c)

**Fig. 4**

a)

b)

c)

**Fig. 5**

a)

b)

c)

**Fig. 6**

a)

b)

c)

**Fig. 7**

**Fig. 8**

**Fig. 9**

**Fig. 10**

**Fig. 11**

Europäisches Patentamt

European Patent Office

Office européen des brevets

# EUROPEAN SEARCH REPORT

Application Number

EP 15 30 5397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/003725 A1 (WAN ERNEST YIU CHEONG [AU]) 1 January 2015 (2015-01-01) | 1,2,4-10 | INV. G06T5/00 |
| A | * abstract * * paragraph [0003] - paragraph [0012] * * paragraph [0104] - paragraph [0154] * * figures 3-7 * | 3 | |
| X | JOBST HORENTRUP ET AL: "Confidence-aware guided image filter", 2014 IEEE INTERNATIONAL CONFERENCE ON IMAGE PROCESSING (ICIP), 1 October 2014 (2014-10-01), pages 3243-3247, XP055192222, DOI: 10.1109/ICIP.2014.7025656 ISBN: 978-1-47-995751-4 | 1,2,4-10 | |
| A | * abstract * * sections 1-4 * | 3 | |
| A | KAIMING HE ET AL: "Guided Image Filtering", IEEE TRANSACTIONS ON PATTERN ANALYSIS AND MACHINE INTELLIGENCE, vol. 35, no. 6, 1 June 2013 (2013-06-01), pages 1397-1409, XP055127406, ISSN: 0162-8828, DOI: 10.1109/TPAMI.2012.213 * the whole document * | 1-10 | TECHNICAL FIELDS SEARCHED (IPC) G06T |
| A | KAIMING HE ET AL: "A global sampling method for alpha matting", COMPUTER VISION AND PATTERN RECOGNITION (CVPR), 2011 IEEE CONFERENCE ON, IEEE, 20 June 2011 (2011-06-20), pages 2049-2056, XP032037997, DOI: 10.1109/CVPR.2011.5995495 ISBN: 978-1-4577-0394-2 * the whole document * | 1-10 | |

-/--

The present search report has been drawn up for all claims

| Place of search | Date of completion of the search | Examiner |
|---|---|---|
| Munich | 28 September 2015 | Katartzis, Antonios |

EPO FORM 1503 03.82 (P04C01)

Europäisches
Patentamt

European
Patent Office

Office européen
des brevets

# EUROPEAN SEARCH REPORT

Application Number

EP 15 30 5397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | LEVIN A ET AL: "A CLOSED-FORM SOLUTION TO NATURAL IMAGE MATTING", IEEE TRANSACTIONS ON PATTERN ANALYSIS AND MACHINE INTELLIGENCE, IEEE COMPUTER SOCIETY, USA, 1 February 2008 (2008-02-01), pages 228-242, XP008146555, ISSN: 0162-8828 * the whole document * | 1-10 | |
| A,D | JACHALSKY J ET AL: "Confidence evaluation for robust, fast-converging disparity map refinement", MULTIMEDIA AND EXPO (ICME), 2010 IEEE INTERNATIONAL CONFERENCE ON, IEEE, PISCATAWAY, NJ, USA, 19 July 2010 (2010-07-19), pages 1399-1404, XP031761528, ISBN: 978-1-4244-7491-2 * the whole document * | 1-10 | |

**TECHNICAL FIELDS SEARCHED (IPC)**

The present search report has been drawn up for all claims

| Place of search | Date of completion of the search | Examiner |
|---|---|---|
| Munich | 28 September 2015 | Katartzis, Antonios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                             

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 30 5397

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2015

| Patent document cited in search report | Publication date | Patent family member(s) | Publication date |
|---|---|---|---|
| US 2015003725 A1 | 01-01-2015 | AU 2013206597 A1<br>US 2015003725 A1 | 22-01-2015<br>01-01-2015 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 14306979 A

- EP 14306869 A

**Non-patent literature cited in the description**

- **C. RHEMANN et al.** *Alpha Matting Benchmark, www.alphamatting.com.*
- **A. LEVIN et al.** A Closed-Form Solution to Natural Image Matting. *IEEE Transactions on Pattern Analysis and Machine Intelligence,* 2008, vol. 30, 228-242
- **KÖHLER et al.** Improving Alpha Matting and Motion Blurred Foreground Estimation. *Proceedings of the 2013 IEEE International Conference on Image Processing (ICIP),* 2013, 3446-3450

- **PETSCHNIGG et al.** Digital photography with flash and no-flash image pairs. *ACM Transactions on Graphics (TOG) - Proceedings of ACM SIGGRAPH,* 2004, vol. 23, 664-672
- **JACHALSKY et al.** Confidence evaluation for robust, fast-converging disparity map refinement. *IEEE International Conference on Multimedia and Expo (ICME),* 2010, 1399-1404
- **C. RHEMANN et al.** A Perceptually Motivated Online Benchmark For Image Matting. *Proceedings of the 2009 IEEE Conference on Computer Vision and Pattern Recognition (CVPR'09),* 2009, 1826-1833